(19)

Europäisches Patentamt
European Patent Office
Office européen des brevets

(11) **EP 1 944 592 A2**

(12) **EUROPEAN PATENT APPLICATION**

(43) Date of publication:
**16.07.2008 Bulletin 2008/29**

(51) Int Cl.:
*G01J 9/00* (2006.01)   *H04B 10/158* (2006.01)

(21) Application number: **07023036.2**

(22) Date of filing: **28.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **09.01.2007 JP 2007001316**

(71) Applicant: **FUJITSU LIMITED**
**Kawasaki-shi,**
**Kanagawa 211-8588 (JP)**

(72) Inventor: **Watanabe, Shigeki**
**Kawasaki-shi**
**Kanagawa 211-8588 (JP)**

(74) Representative: **HOFFMANN EITLE**
**Patent- und Rechtsanwälte**
**Arabellastrasse 4**
**81925 München (DE)**

(54) **Optical-phase monitoring apparatus and optical-phase monitoring method**

(57) An optical-phase monitoring apparatus includes an optical switch, an optical-phase detecting circuit, and a display circuit. The optical switch multiplexes signal light and a control optical pulse, and outputs a portion of the signal light that overlaps with the control optical pulse in time as output light. The optical-phase detecting circuit detects an optical phase of the output light. The display circuit displays information concerning the optical phase.

## FIG.1

EP 1 944 592 A2

**Description**

CROSS-REFERENCE TO RELATED APPLICATIONS

This application is based upon and claims the benefit of priority from the prior Japanese Patent Application No. 2007-001316, filed on January 9, 2007, the entire contents of which are incorporated herein by reference.

BACKGROUND OF THE INVENTION

1. Field of the Invention

The present invention relates to an optical-phase monitoring apparatus and an optical-phase monitoring method.

2. Description of the Related Art

Conventionally, as an apparatus for monitoring optical-phase modulated signal light, an apparatus that receives an optical signal by an optical receiver and detects an optical phase thereof by an electrical circuit after converting the optical signal into an electrical signal has been available. Moreover, an electrical and an optical sampling oscilloscope have been developed as a high-speed waveform monitor, such as that described in Japanese Patent Laid-Open Publication No. 2003-65857.

However, the conventional electrical sampling oscilloscope described above has such a problem that if high-speed signal light that exceeds an operation speed limit of an electrical circuit, formed by an optical receiver and a display circuit, is input to a waveform monitor, the optical phase of this signal light cannot be monitored. Furthermore, with the conventional electrical sampling oscilloscope described above, deviation of the optical phase of optical-phase modulated signal light from a set value for comparison cannot be monitored. Therefore, there is a problem in that the quality of the signal light cannot be monitored.

Moreover, in a conventional optical sampling oscilloscope, although the measurement band is remarkably improved compared to the electrical sampling oscilloscope, the quality of optical-phase modulated signal light cannot be monitored. Therefore, there is a problem in that that quality of signal light cannot be monitored.

SUMMARY OF THE INVENTION

It is an object of the present invention to at least solve the above problems in the conventional technologies.

An optical-phase monitoring apparatus according to one aspect of the present invention includes an optical switch that multiplexes signal light and a control optical pulse, and that outputs a portion of the signal light as output light, the portion overlapping with the control optical pulse in time; a phase detecting unit that detects an optical phase of the output light; and a display unit that displays information concerning the optical phase.

An optical-phase monitoring method according to another aspect of the present invention includes multiplexing signal light and a control optical pulse; outputting a portion of the signal light, the portion overlapping with the control optical pulse in time as output light; detecting an optical phase of the output light; and displaying information concerning the optical phase.

The other objects, features, and advantages of the present invention are specifically set forth in or will become apparent from the following detailed description of the invention when read in conjunction with the accompanying drawings.

BRIEF DESCRIPTION OF THE DRAWINGS

Fig. 1 is a block diagram of an optical-phase monitoring apparatus according to a first embodiment;
Fig. 2 is a block diagram of a first configuration of an optical-phase detecting circuit of the optical-phase monitoring apparatus;
Fig. 3 is a block diagram of a second configuration of the optical-phase detecting circuit of the optical-phase monitoring apparatus;
Fig. 4 is a block diagram of a third configuration of the optical-phase detecting circuit of the optical-phase monitoring apparatus;
Fig. 5 is a block diagram of an optical-phase monitoring apparatus according to a second embodiment;
Fig. 6 is a block diagram of a first example of the optical-phase monitoring apparatus according to the second embodiment;

Fig. 7 is a block diagram of a second example of the optical-phase monitoring apparatus;

Fig. 8 is a block diagram of a first example of an optical switch of the optical-phase monitoring apparatus according to the second embodiment;

Fig. 9 is a block diagram of a second example of the optical switch;

Fig. 10 is a diagram for explaining the optical switch;

Fig. 11 is a diagram showing one example of a condition of phase matching of signal light and idler light;

Fig. 12A is a graph showing binary optical phase information of phase-modulated signal light displayed by the display circuit of the optical-phase monitoring apparatus according to the second embodiment; and

Fig. 12B is an example of a graph showing quadrature optical phase information of QPSK signal light displayed by the display circuit of the optical-phase monitoring apparatus according to the second embodiment.

## DETAILED DESCRIPTION OF THE PREFERRED EMBODIMENTS

Referring to the accompanying drawings, exemplary embodiments according to the present invention are explained in detail below.

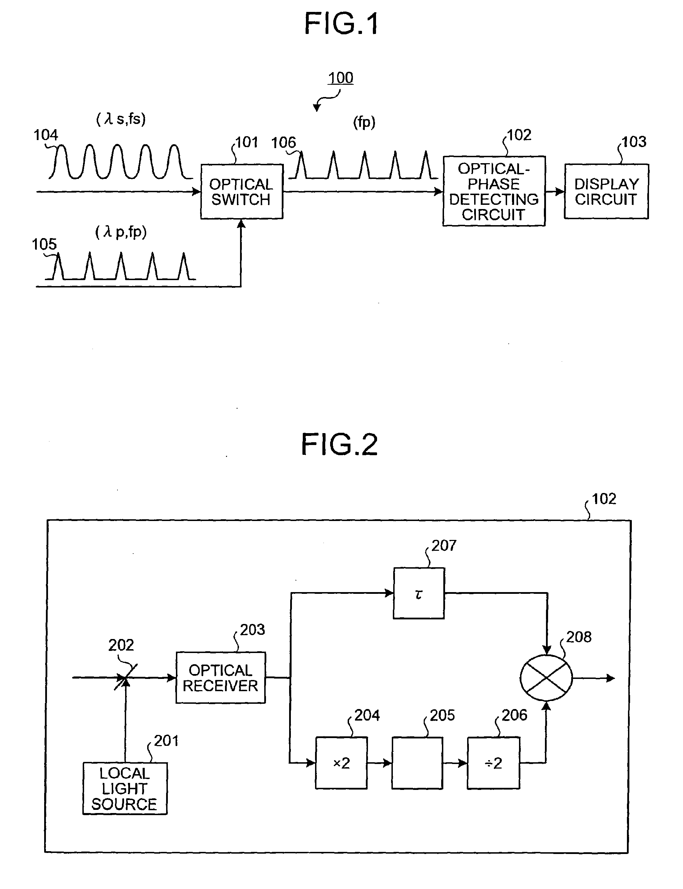

Fig. 1 is a block diagram of an optical-phase monitoring apparatus according to the first embodiment. As shown in Fig. 1, an optical-phase monitoring apparatus 100 monitors a phase of signal light that is modulated by a phase modulation scheme of binary (0 and $\pi$) optical phase. The optical-phase monitoring apparatus 100 includes an optical switch 101, an optical-phase detecting circuit 102, and a display circuit 103.

Upon receiving signal light 104 and a control optical pulse 105 (sampling pulse), the optical switch 101 multiplexes the signal light 104 and the control optical pulse 105. The signal light 104 has a wavelength of $\lambda$s and a cyclic frequency of fs. The control optical pulse 105 has a wavelength of $\lambda_p$ and a cyclic frequency of fp.

The optical switch 101 outputs light of a time duration in which the signal light 104 and the control optical pulse 105 overlap in time to the optical-phase detecting circuit 102. Specifically, the optical switch 101 samples the signal light at time intervals corresponding to peak timing of the control optical pulse 105 to output the signal light. In this case, the cyclic frequency of output light 106 output to the optical-phase detecting circuit 102 from the optical switch 101 is fp, which is same as that of the control optical pulse 105.

The optical-phase detecting circuit 102 detects an optical phase of the output light 106 output from the optical switch 101. The optical-phase detecting circuit 102 outputs, to the display circuit 103, an electrical signal indicative of information concerning the detected optical phase. The display circuit 103 displays the information concerning the optical phase output from the optical-phase detecting circuit 102 on a display device not shown. Specifically, the display circuit 103 displays the information concerning the phase of the signal light 104 that is input to the optical-phase monitoring apparatus 100 by tracing the electrical signal output from the optical-phase detecting circuit 102 in a time scale.

Fig. 2 is a block diagram of a first configuration of the optical-phase detecting circuit of the optical-phase monitoring apparatus. The optical-phase detecting circuit 102 detects the optical phase of the output light 106 that is output from the optical switch 101 by an optical heterodyne method.

As shown in Fig. 2, the optical-phase detecting circuit 102 includes a local light source 201, a multiplexer unit 202, an optical receiver 203, a frequency multiplier (x2) 204, a filter unit 205, a frequency divider ($\div$2) 206, a delaying unit ($\tau$) 207, and a multiplier circuit 208. The local light source 201 outputs local light to the multiplexer unit 202. The multiplexer unit 202 multiplexes the output light 106 output from the optical switch 101 and the local light output from the local light source 201, to output multiplexed light to the optical receiver 203.

The optical receiver 203 receives the multiplexed light and converts the light into an electrical signal. The optical receiver 203 outputs only a difference frequency signal (beat signal) of the output light 106 output from the optical switch 101 and the local light output from the local light source 201. The optical receiver 203 branches the difference frequency signal into two and outputs the branched signals to the delaying unit 207 and the frequency multiplier 204, respectively.

The frequency multiplier 204 multiplies the frequency of the difference frequency signal output from the optical receiver 203 to a frequency twice as high. Thus, the difference frequency signal whose optical phase is binary-phase-modulated by 0 and $\pi$ is converted into a carrier signal having a fixed phase value and a doubled frequency. The frequency multiplier 204 outputs the frequency-doubled difference frequency signal to the filter unit 205.

The filter unit 205 extracts only a doubled frequency component from the difference frequency signal output from the frequency multiplier 204. Thus, only the carrier signal having a fixed value and a doubled frequency is extracted. The filter unit 205 outputs the extracted difference frequency signal to the frequency divider 206. The frequency divider 206 divides the frequency of the difference frequency signal output from the filter unit 205 to be half the frequency. Thus, the carrier signal having the original frequency that is not modulated is generated. The frequency divider 206 outputs, to the multiplier circuit 208, the difference frequency signal whose frequency is divided.

The delaying unit 207 gives a predetermined delay amount $\tau$ to the difference frequency signal output from the optical receiver 203 and outputs the obtained signal to the multiplier circuit 208. The delaying unit 207 gives an appropriate delay amount τ to the difference frequency signal so that the difference frequency signal that is output from the frequency divider 206 and the difference frequency signal that is output from the delaying unit 207 are mixed while matching timing.

The multiplier circuit 208 multiplies the difference frequency signal (carrier signal) that is output from the frequency divider 206 and the difference frequency signal that is output from the delaying unit 207. Thus, an electrical signal indicative of the phase information of the output light 106 that is output from the optical switch 101 with intensity is generated. The multiplier circuit 208 outputs, to the display circuit 103, the electrical signal that is obtained by multiplication as information concerning the optical phase (see Fig. 1).

Furthermore, a polarization controller or the like that sets a polarization state of the output light 106 output from the optical switch 101 and the local light output from the local light source 201 to an optimal detection state can be provided. The frequency multiplier 204, the filter unit 205, the frequency divider 206, the delaying unit 207, and the multiplier circuit 208 constitute an optical synchronous receiving circuit.

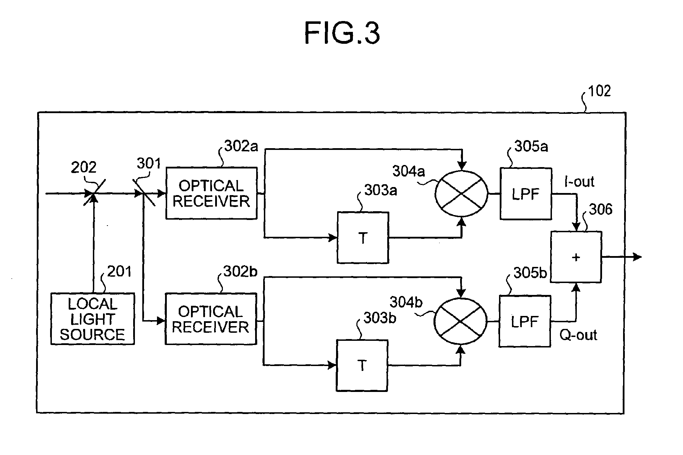

Fig. 3 is a block diagram of a second configuration of the optical-phase detecting circuit of the optical-phase monitoring apparatus according to the first embodiment. The optical-phase monitoring apparatus 100 herein monitors the optical phase of the signal light 104 that is modulated by a differential phase shift keying (DPSK) scheme of binary (0 and π) optical phase.

Moreover, the optical-phase detecting circuit 102 of the optical-phase monitoring apparatus 100 detects the optical phase of the output light 106 that is output from the optical switch 101 by an optical homodyne detection scheme. As shown in Fig. 3, the optical-phase detecting circuit 102 includes the local light source 201, the multiplexer unit 202, a branching unit 301, an optical receiver 302a, an optical receiver 302b, a delaying unit 303a, a delaying unit 303b, a multiplier circuit 304a, a multiplier circuit 304b, a filter unit 305a, a filter unit 305b, and an adder circuit 306.

In the configuration of the optical-phase monitoring apparatus 100, since components other than the optical-phase detecting circuit 102 are the same as those in the optical-phase monitoring apparatus 100 shown in Fig. 1, the explanation thereof is omitted herein. The local light source 201 outputs local light to the multiplexer unit 202. The multiplexer unit 202 multiplexes the output light 106 output from the optical switch 101 and the local light output from the local light source 201, to output multiplexed light to the branching unit 301.

The branching unit 301 branches the multiplexed light output from the multiplexer unit 202 into two light beams. The branching unit 301 herein is constituted of an optical coupler, a half mirror (90 degree hybrid circuit), or the like. The branching unit 301 outputs one of the branched light beams to the optical receiver 302a, and the other to the optical receiver 302b. Because of a property of optical couplers, the branched light output to the optical receiver 302b is shifted in phase by 90 degrees relative to the branched light output to the optical receiver 302a.

The optical receiver 302a receives the branched light that is output from the branching unit 301, and converts the branched light into an electrical signal. The optical receiver 302a branches the electrical signal obtained by the conversion into two signals, and outputs one of the branched signals directly to the multiplier circuit 304a, and the other one to the multiplier circuit 304a through the delaying unit 303a. The delaying unit 303a delays the branched light that is output from the optical receiver 302a to the multiplier circuit 304a by time T corresponding to 1 bit.

Similarly, the optical receiver 302b receives the branched light that is output from the branching unit 301, and converts the branched light into an electrical signal. The optical receiver 302b branches the electrical signal obtained by the conversion into two signals, and outputs one of the branched signals directly to the multiplier circuit 304b, and the other one to the multiplier circuit 304b through the delaying unit 303b. The delaying unit 303b delays the branched signal that is output from the optical receiver 302b to the multiplier circuit 304b by 1 bit.

The multiplier circuit 304a multiplies the branched signal that is directly input by the optical receiver 302a and the branched signal that is input by the optical receiver 302a through the delaying unit 303a. The multiplier circuit 304a outputs, to the filter unit 305a, an electrical signal that is obtained by the multiplication. Similarly, the multiplier circuit 304b multiplies the branched signal that is directly input by the optical receiver 302b and the branched signal that is input by the optical receiver 302b through the delaying unit 303b. The multiplier circuit 304b outputs, to the filter unit 305b, an electrical signal that is obtained by the multiplication.

The filter unit 305a extracts only a predetermined frequency component from the electrical signal that is output from the multiplier circuit 304a. The filter unit 305a herein is configured with a low pass filter, and extracts only a low frequency component including the frequency fp from the electrical signal that is output by the multiplier circuit 304a. The filter unit 305a outputs the extracted electrical signal (I-out) to the adder circuit 306.

Similarly, the filter unit 305b extracts only a predetermined frequency component from the electrical signal that is output by the multiplier circuit 304b. The filter unit 305b herein is configured with a low pass filter, and extracts only a low frequency component including the frequency fp from the electrical signal that is output by the multiplier circuit 304b. The filter unit 305b outputs the extracted electrical signal (Q-out) to the adder circuit 306.

The adder circuit 306 adds the electrical signal that is output by the filter unit 305a and the electrical signal that is output by the filter unit 305b. Thus, an electrical signal that indicates the phase information of the output light 106 that is output by the optical switch 101 with intensity is generated. The adder circuit 306 outputs the electrical signal that is obtained by the addition as information concerning the optical phase to the display circuit 103 (see Fig. 1).

As described, through the generation of the branched light beams whose phases are shifted relative to each other by 90 degrees by the branching unit 301, and through the addition, by the adder circuit 306, of the detection results after the detection is performed, phase information can be obtained stably regardless of the phase state of the multiplexed light that is input to the branching unit 301. The output light 106 that is output by the optical switch 101 and the local light that is output by the local light source 201 are required to have the same wavelength. Moreover, in the present example, by digitalizing the electrical signals of I-out and Q-out, quadrature phase in the case where the input signal light is of differential quadrature phase shift keying (D-QPSK) can be monitored.

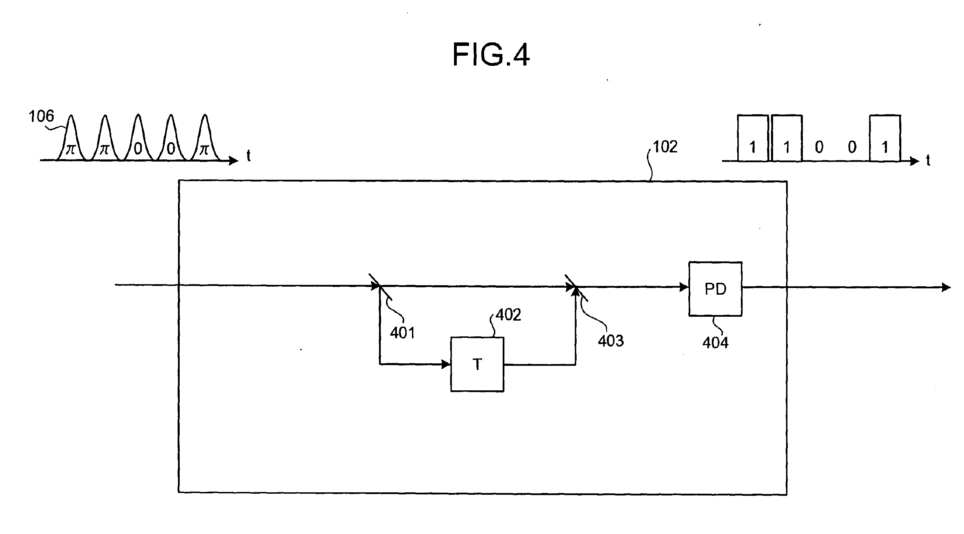

Fig. 4 is a block diagram of a third configuration of the optical-phase detecting circuit of the optical-phase monitoring apparatus. A case where the output light 106 output from the optical switch 101 is a return-to-zero differential phase shift keying (RZ-DPSK) signal light is explained herein. The optical-phase detecting circuit 102 herein is constituted of a Mach-Zehnder interferometer.

The optical-phase detecting circuit 102 includes a branching unit 401, a delaying unit (T) 402, a multiplexing unit 403, and an optical receiver (PD) 404. In the configuration of the optical-phase monitoring apparatus 100, since components other than the optical-phase detecting circuit 102 are the same as those in the optical-phase monitoring apparatus 100 shown in Fig. 1, the explanation thereof is omitted herein.

The branching unit 401 branches the output light 106 output from the optical switch 101 into two light beams. The output light 106 output from the optical switch 101 is RZ-DPSK signal light that is modulated by the differential phase modulation scheme of binary (0 and n) optical phase and that is RZ-pulsed by intensity modulation. The branching unit 401 outputs one of the branched light beams directly to the multiplexer unit 403, and the other one to the multiplexer unit 403 through the delaying unit 402.

The delaying unit 402 delays the branched light that is output from the branching unit 401 to the multiplexer circuit 403 by 1 bit. The multiplexer unit 403 multiplexes the branched light that is directly output from the branching unit 401 and the branched light that is output from the branching unit 401 through the delaying unit 402. The multiplexer unit 403 outputs, to the optical receiver 404, demodulated signal light that is obtained by the multiplexing as information concerning an optical phase.

The optical receiver 404 converts the demodulated signal light output from the multiplexer unit 403 into an electrical signal, and outputs the electrical signal to the display circuit 103 (see Fig. 1) as the information concerning the optical phase. The optical receiver 404 is constituted of a photodiode (PD) herein.

As described, according to the optical-phase monitoring apparatus 100 of the first embodiment, the signal light 104 is sampled at predetermined time intervals, and the optical phase of the signal light 104 on which the sampling is performed can be monitored. Therefore, according to the optical-phase monitoring apparatus and the optical-phase monitoring method according to the embodiment, an optical phase of optical-phase modulated high-speed signal light can be detected.

Moreover, as described, with the optical-phase monitoring apparatus 100 according to the first embodiment, deviation, from a set value for comparison, of the optical phase of the signal light 104 subjected to optical-phase modulation can be monitored. Therefore, according to the optical-phase monitoring apparatus 100 of the first embodiment, the quality of the signal light 104 subjected to optical-phase modulation can be monitored.

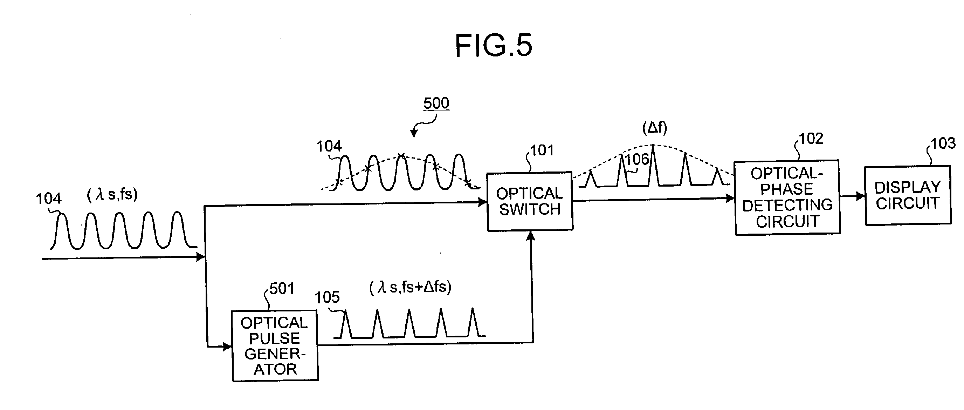

Fig. 5 is a block diagram of an optical-phase monitoring apparatus according to the second embodiment. In Fig. 5, like reference characters are used to identify like parts in Fig. 1, and the explanation thereof is omitted. As shown in Fig. 5, an optical-phase monitoring apparatus 500 according to the second embodiment has an optical pulse generator 501 in addition to the components of the optical-phase monitoring apparatus 100 according to the first embodiment.

The optical pulse generator 501 generates an optical pulse train with a frequency fs+Δfs (where Δfs<<fs) that slightly differs from the frequency fs, based on the signal light 104 having the wavelength λs and the frequency fs and input to the optical-phase monitoring apparatus 500. Specifically, the optical pulse generator 501 branches and obtains the signal light 104 input to the optical-phase monitoring apparatus 500.

The optical pulse generator 501 includes a clock regenerator and the like, and regenerates a clock signal having the frequency fs from the obtained signal light 104, and generates an optical pulse train that is synchronized with the frequency fs+Δfs. The optical pulse generator 501 outputs the generated optical pulse train to the optical switch 101 as the control optical pulse 105 described above.

In this case, the pulse of the output light 106 that is output from the optical switch 101 is to be the repetition frequency Δf that is sufficiently low with respect to the frequency fs of the signal light 104. Even if the signal light 104 that is input to the optical-phase monitoring apparatus 500 is high-speed signal light having a speed that exceeds the operation speed limit of an electrical circuit constituting the display unit 103, it is possible to monitor the optical phase of the signal light.

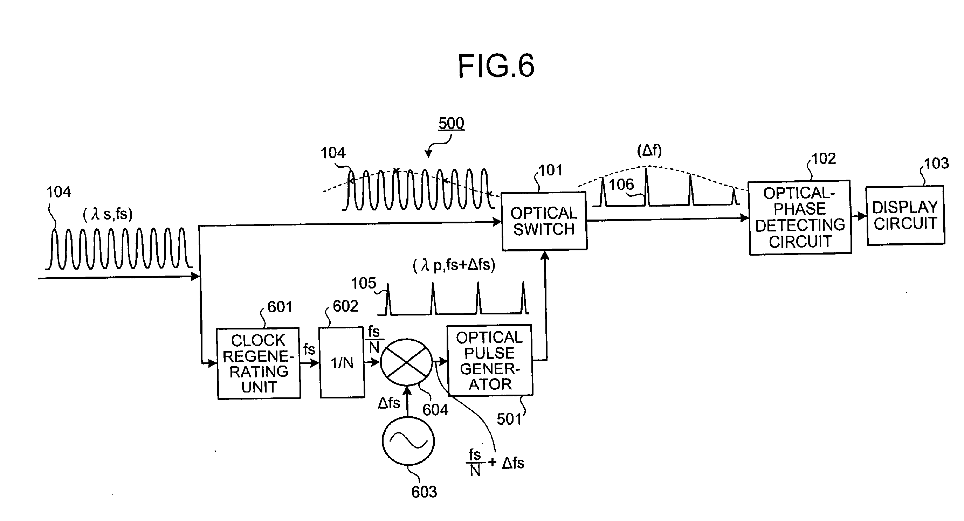

Fig. 6 is a block diagram of a first example of the optical-phase monitoring apparatus 500 according to the second embodiment. As shown in Fig. 6, the optical-phase monitoring apparatus 500 includes a clock regenerating unit 601, a frequency divider (1/N) 602, an oscillator 603, a multiplier circuit 604, the optical pulse generator 501, the optical switch 101, the optical-phase detecting circuit 102, and the display unit 103.

The clock regenerating unit 601 branches and obtains the signal light 104 that is input to the optical-phase monitoring apparatus 500, and regenerates a clock signal having the reference frequency fs from the obtained signal light 104. The clock regenerating unit 601 outputs the regenerated clock signal to the frequency divider 602. The frequency divider 602 divides the frequency of the clock signal output by the clock regenerating unit 601 to be fs/N (where N is a positive integer). N is set such that an optimal frequency band for an operation band of the optical-phase detecting circuit 102 and the display circuit 103 is obtained. The frequency divider 602 outputs the clock signal having the frequency of fs/N obtained by the frequency division to the multiplier circuit 604.

The oscillator 603 generates a clock signal having a frequency of $\Delta$fs and outputs to the multiplier circuit 604. The multiplier circuit 604 multiplies the clock signal having the frequency of fs/N output from the frequency divider 602 and the clock signal having the frequency of $\Delta$fs output from the oscillator 603, to generate a clock signal having the frequency of fs/N+$\Delta$fs. The multiplier circuit 604 outputs the generated clock signal having the frequency of fs/N+$\Delta$fs to the optical pulse generator 501.

The optical pulse generator 501 generates an optical pulse train that is synchronized with the wavelength of $\lambda$p and the frequency of fs/N+$\Delta$fs, based on the clock signal having the frequency fs/N+$\Delta$fs output from the multiplier circuit 604. The optical pulse generator 501 outputs the generated optical pulse train to the optical switch 101 as the control optical pulse 105 described above.

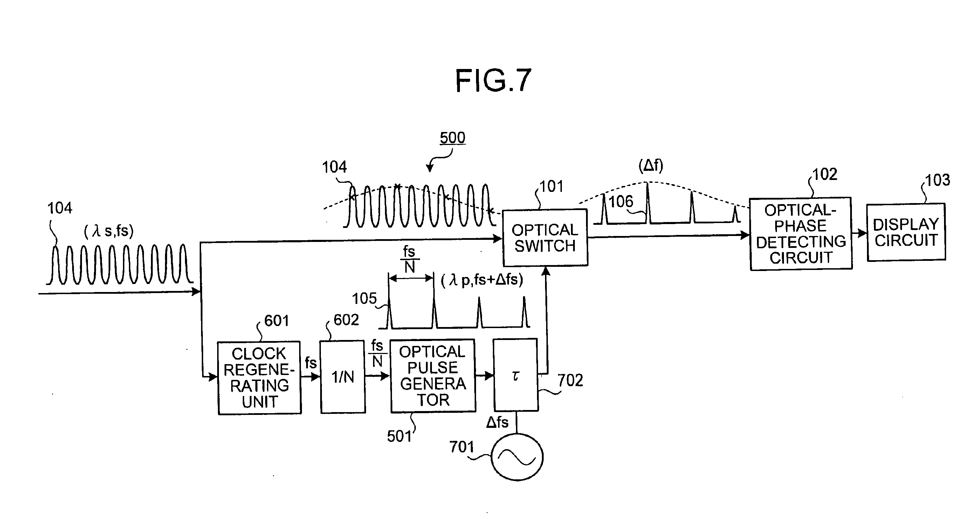

Fig. 7 is a block diagram of a second example of the optical-phase monitoring apparatus according to the second embodiment. In Fig. 7, like reference characters are used to identify like parts in Fig. 6, and the explanation thereof is omitted. As shown in Fig. 7, the optical-phase monitoring apparatus 500 may include the clock regenerating unit 601, the frequency divider 602, the optical pulse generator 501, an oscillator 701, a delaying unit ($\tau$) 702, the optical switch 101, the optical-phase detecting circuit 102, and the display unit 103.

In this case, the clock signal having the frequency of fs/N is output from the frequency divider 602 to optical pulse generator 501. The optical pulse generator 501 generates an optical pulse train that is synchronized with the wavelength of $\lambda$p and the frequency of fs/N, based on the clock signal having the frequency fs/N output from the frequency divider 602. The optical pulse generator 501 outputs the generated optical pulse train to the delaying unit 702 as the control optical pulse 105 described above.

The oscillator 701 generates a clock signal having, for example, the frequency of $\Delta$fs to output to the delaying unit 702. The delaying unit 702 delays, in a cycle, the control optical pulse 105 having the frequency fs/N output from the optical pulse generator 501 and outputs the control optical pulse 105 to the optical switch 101. For example, the delaying unit 702 delays the control optical pulse 105 in a cycle of the frequency $\Delta$fs of the clock signal output from the oscillator 701.

Thus, by imparting cyclic delay to the control optical pulse 105, a 1-bit interval of the signal light 104 can be covered, and 1-bit delay detection can be effectively applied.

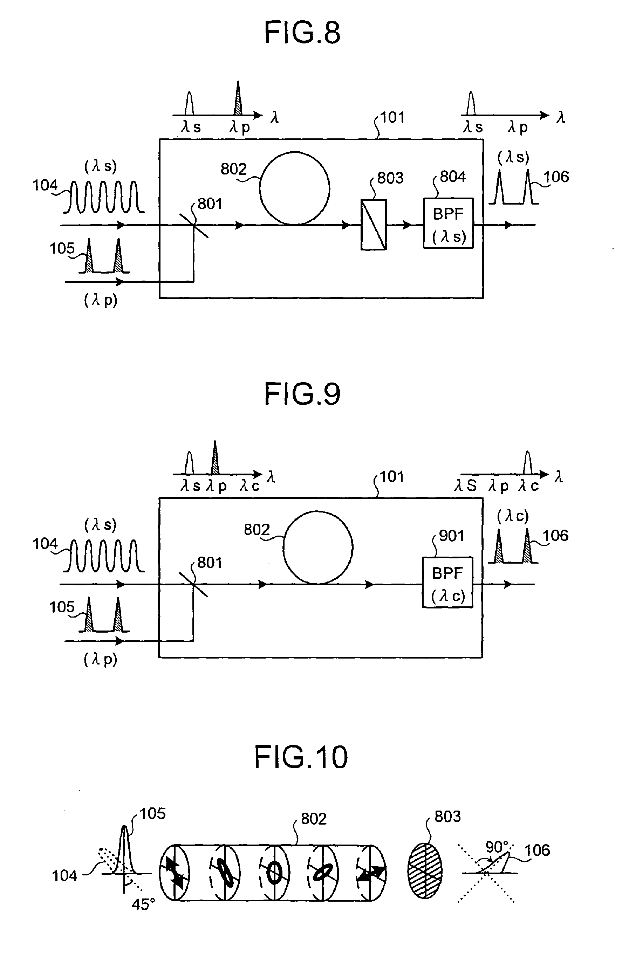

Fig. 8 is a block diagram of a first example of an optical switch of the optical-phase monitoring apparatus according to the second embodiment. In this example, the optical switch 101 of the optical-phase monitoring apparatus 500 according to the second embodiment is an optical parametric amplification fiber switch. As shown in Fig. 8, the optical switch 101 includes a multiplexer unit 801, a non-linear optical fiber 802, a polarizer 803, and an optical filter (band pass filter (BPF)) 804.

The multiplexer unit 801 multiplexes the signal light 104 that is input to the optical-phase monitoring apparatus 500 and the control optical pulse 105 that is output from the optical pulse generator 501, to output to the non-linear optical fiber 802. The signal light 104 that is input to the optical-phase monitoring apparatus 500 and the control optical pulse 105 that is output from the optical pulse generator 501 are input to the multiplexer unit 801 such that the polarization directions differ from each other by about 45 degrees.

The non-linear optical fiber 802 passes multiplexed light of the signal light 104 and the control optical pulse 105 that is output from the multiplexer unit 801, to output to the polarizer 803. The non-linear optical fiber 802 generates four-wave mixing (FWM) light, and has an optical parametric amplification effect.

The polarizer 803 passes only a component of a predetermined polarization direction in the multiplexed light output from the non-linear optical fiber 802, to output to the optical filter 804. The predetermined polarization direction herein is set to a polarization direction that optimally shut out the signal light 104 at the time of being input to the optical-phase monitoring apparatus 500 (direction substantially perpendicular thereto).

The optical filter 804 extracts only a predetermined wavelength component from the multiplexed light output from the polarizer 803. The optical filter 804 is configured with a BPF herein, and extracts only a component of the wavelength $\lambda$s of the signal light 104. The optical filter 804 outputs the extracted component of the multiplexed light to the optical-phase detecting circuit 102 (see Fig. 1, etc.).

Fig. 9 is a block diagram of a second example of the optical switch of the optical-phase monitoring apparatus 500. In Fig. 9, like reference characters are used to identify like parts in Fig. 8, and the explanation thereof is omitted. As shown in Fig. 9, the optical switch 101 may include the multiplexer unit 801, the non-linear optical fiber 802, and an optical filter (BPF) 901.

The optical filter 901 outputs the four-wave mixing light (idler light) having a wavelength λc that is generated at the non-linear optical fiber 802. The optical filter 901 is configured by a BPF and extracts only a component of the wavelength λc. The optical filter 901 outputs the four-wave mixing light (idler light) to the optical-phase detecting circuit 102 (see Fig. 1, etc.).

Fig. 10 is a diagram for explaining the optical switch of the optical-phase monitoring apparatus according to the second embodiment. As explained in Fig. 8, the polarizer 803 is set in a direction perpendicular to the polarization direction of the signal light 104 at the time of being input to the optical-phase monitoring apparatus 500. Therefore, when only the signal light 104 passes the non-linear optical fiber 802, the signal light 104 is completely shut out by the polarizer 803.

On the other hand, when the signal light 104 and the control optical pulse 105 pass the non-linear optical fiber 802 in synchronization (in a state in which the two optical pulses overlap with each other in time), if the power of the control optical pulse 105 is increased, the polarization state of the signal light pulse changes by cross phase modulation (XPM) inside the non-linear optical fiber 802. Therefore, a part of the signal light 104 passes the polarizer 803.

If the phase of the signal light 104 is changed by π from an input state by further increasing the power of the control optical pulse 105, the polarization direction of the signal light 104 rotates by about 90 degrees relative to the polarization direction at the time of being input to the optical-phase monitoring apparatus 500. As a result, the signal light 104 passes the polarizer 803 at substantially 100%, thereby enabling switching of the signal light 104 by on/off of the control optical pulse 105.

As described, by utilizing the optical parametric amplification effect obtained by FWM as the optical switch 101 shown in Figs. 8 and 9, it is possible to significantly improve the switching efficiency of the optical switch 101. The switching efficiency is a ratio of the power of the input signal light to the power of the output signal light.

Therefore, by using the optical switch 101 described above in the optical-phase monitoring apparatus 500, it becomes possible to significantly increase the output power of a switched signal light component. Accordingly, it becomes possible to monitor an optical phase with little deterioration of an optical SN ratio (signal to noise ratio).

When the length of the non-linear optical fiber 802 is expressed as L, and the loss is expressed as α, when output signal light $E_{S2}$ is switched from input signal light $E_{S1}$ by the non-linear optical fiber 802, a conversion efficiency ηs ($\equiv |E_{S2}|^2/|E_{S1}|^2$) of the optical switch 101 shown in Fig. 8 is in proportional to exp(-αL)G under an ideal phase matching condition.

$$\eta_S \propto \exp(-\alpha L)G \qquad (1)$$

Where, G represents a parametric gain and can be approximated as follows.

$$G \approx [\gamma P_P \lambda(L)]^2 \qquad (2)$$

$$\lambda(L) \doteqdot \frac{[1 - \exp(-\alpha L)]}{\alpha} \qquad (3)$$

Where, Pp represents the input control optical power, and 1(L) represents non-linear interaction length. Moreover, a three-dimensional non-linear count of the non-linear optical fiber can be expressed as follows.

$$\gamma \doteqdot \frac{\omega n_2}{cA_{eff}} \qquad (4)$$

Where, c represents the speed of light, ω represents an optical angle frequency, $n_2$ represents a non-linear refractive index, and $A_{eff}$ represents an effective mode cross section. As is obvious from Equations (1) and (2), the switching efficiency of the signal light increases according to the increase of $\gamma P_p \lambda(L)$. If the non-linear optical fiber 802 to be used is determined, y and λ(L) become fixed values. Therefore, the switching efficiency increases with Pp.

Furthermore, in the optical switch using the non-linear optical fiber 802, a tertiary non-linear optical effect such as XPM and FWM is used. Such a non-linear optical effect is a high speed phenomenon with a response speed in a femtosecond order. Therefore, the present invention enables observation of optical phase information at a high resolution of several tens to several hundreds of fs.

For effective implementation of the present invention using an optical fiber, a configuration favorable for the third-order non-linear optical effect is necessary. For example, generation of FWM is heavily dependent on chromatic dispersion of the non-linear optical fiber 802. For phase matching, it is effective to match the wavelength of the control optical pulse 105 with zero-dispersion wavelength $\lambda 0$ of the non-linear optical fiber 802, or to use a dispersion flat fiber of zero dispersion (or with sufficiently small chromatic dispersion). However, depending on the required length of the non-linear optical fiber 802 and wavelength spacing with signal light wavelength, such requirement can be eased.

As an example of an optical fiber as described above, an optical non-linear fiber, a photonic crystal fiber, and an optical fiber in which germanium or bismuth is doped in the core to enhance the non-linear effect are effective, for example. As a non-linear device other than optical fibers, a semiconductor optical amplifier, a quantum dot optical amplifier, a second-order non-linear optical crystal such as potassium titanyl phosphate (KTP)and LiNbO$_3$ in a pseudo phase matching structure (periodically poled LN (PPLN)) for three-wave mixing can be applied.

Furthermore, to achieve four-wave mixing in a sufficiently wide band with a non-linear optical fiber, it is necessary to match phases of signal light (wavelength $\lambda s$) and idler light (wavelength $\lambda c$).

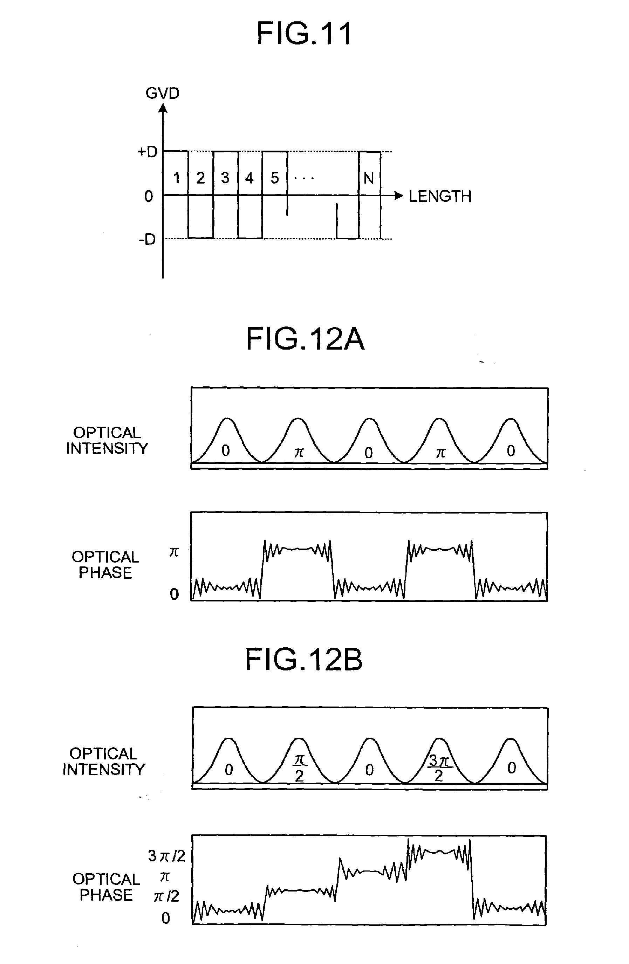

Fig. 11 is a diagram showing one example of a condition of phase matching of signal light and idler light. In Fig. 11, a horizontal axis represents a fiber, and a vertical axis represents dispersion of fiber. An example in which a plurality of fibers of different signs of chromatic dispersion are sequentially arranged so that overall average dispersion becomes zero is shown herein. Moreover, in a non-linear optical fiber that has sufficient non-linear optical effect (for example, for a highly non-linear fiber in which efficiency of the non-linear optical effect is enhanced by increasing optical intensity by making a mode field small and by increasing $n_2$ by doping germanium in the core), the required length is short. Therefore, there is a case where even if the value of the chromatic dispersion is large, four-wave mixing light that has sufficiently high efficiency can be generated.

In such a case, for example, by performing dispersion compensation using a dispersion compensation fiber and the like, four-wave mixing light can be further efficiently generated. In the example shown in Fig. 11, for example, optical fibers having high non-linear effect are arranged at portions of N=1, 3, 5, ..., and optical fibers to compensate dispersion of a non-liner fiber are arranged at portions of N=2, 4, ....

Fig. 12A is a graph showing binary optical phase information of phase-modulated signal light that is displayed by the display circuit of the optical-phase monitoring apparatus according to the second embodiment. The display circuit 103 of the optical-phase monitoring apparatus 500 according to the second embodiment (same in the optical-phase monitoring apparatus 100 according to the first embodiment) displays a waveform as shown in Fig. 12A on a display device not shown. This enables to monitor deviation of the optical phase of optical-phase modulated signal light from a set value (0 and $\pi$).

Fig. 12B is an example of a graph showing quadrature optical phase information of QPSK signal light that is displayed by the display circuit of the optical-phase monitoring apparatus according to the second embodiment. The display circuit 103 of the optical-phase monitoring apparatus 500 according to the second embodiment (same in the optical-phase monitoring apparatus 100 according to the first embodiment) displays a waveform as shown in Fig. 12B on a display device not shown. This enables to monitor deviation of the optical phase of optical-phase modulated signal light from a set value (0, $\pi/2$, $3\pi/2$, and $\pi$). The specific examples of a configuration of the optical switch 101 shown in Figs. 8 to 10 can also be applied to the optical-phase monitoring apparatus 100 according to the first embodiment.

As described, according to the optical-phase monitoring apparatus 500, the signal light 104 can be sampled at predetermined time intervals, and can detect the optical phase of the signal light 104 that is subjected to sampling. Therefore, according to the optical-phase monitoring apparatus 500, the optical phase of high-speed signal light that is optical phase modulated can be detected.

Moreover, according to the optical-phase monitoring apparatus 500, deviation of the optical phase of the optical-phase modulated signal light 104 can be monitored. Therefore, the quality of the optical-phase modulated signal light 104 can be monitored.

Furthermore, by setting the frequency of the control optical pulse 105 output by the optical pulse generator to a frequency of fs+$\Delta$fs that is shifted from the frequency fs of signal light, the frequency of the output light 106 that is output from the optical switch 101 becomes $\Delta$f, which is lower than the frequency fs. Therefore, even if the signal light 104 to be input to the optical-phase monitoring apparatus 500 is high-speed signal light having a speed that exceeds the operation speed limit of an electrical circuit constituting the display circuit 103, the optical phase of the signal light can be monitored.

As explained above, according to the optical-phase monitoring apparatus and the optical-phase monitoring method of the embodiments, signal light can be sampled at predetermined time intervals, and the optical phase of the signal light subjected to sampling can be detected. Therefore, the optical phase of optical-phase modulated high-speed signal light can be detected.

Furthermore, according to the optical-phase monitoring apparatus and the optical-phase monitoring method of the embodiments, deviation of the optical phase of optical-phase modulated signal light from a set value can be monitored. Therefore, the quality of optical-phase modulated signal light can be monitored.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

**Claims**

1. An optical-phase monitoring apparatus comprising:

   an optical switch that multiplexes signal light and a control optical pulse, and that outputs a portion of the signal light as output light, the portion overlapping with the control optical pulse in time;
   a phase detecting unit that detects an optical phase of the output light; and
   a display unit that displays information concerning the optical phase.

2. The optical-phase monitoring apparatus according to claim 1, wherein the phase detecting unit detects the optical phase by an optical heterodyne detection scheme.

3. The optical-phase monitoring apparatus according to claim 2, wherein the phase detecting unit includes
   a local light source that outputs local light;
   an optical receiver that converts an intermediate frequency signal into an electrical signal, the intermediate frequency signal obtained by multiplying the local light and the output light; and
   a heterodyne detection unit that performs heterodyne detection on the electrical signal.

4. The optical-phase monitoring apparatus according to claim 3, wherein the heterodyne detection unit includes
   a branching unit that branches the electrical signal into two electrical signals;
   a frequency multiplier unit that doubles a frequency of one of the two electrical signals;
   an extracting unit that extracts a component of the doubled frequency from the one of the two electrical signals;
   a frequency divider unit that divides a frequency of the extracted component into half the frequency;
   a delaying unit that gives a delay to another one of the two electrical signals; and
   a multiplying unit that multiplies the extracted component whose frequency is divided by the frequency divider unit and the electrical signal to which the delay is given, to output information concerning the optical phase.

5. The optical-phase monitoring apparatus according to claim 1, wherein the phase detecting unit detects the optical phase by an optical homodyne detection scheme.

6. The optical-phase monitoring apparatus according to claim 5, wherein the phase detecting unit includes
   a local light source that outputs local light;
   a multiplexing unit that multiplexes the local light and the output light to obtain multiplexed light;
   an optical coupler that branches the multiplexed light into a first light beam and a second light beam; and
   a delay detection unit that performs delay detection on each of the first light beam and the second light beam.

7. The optical-phase monitoring apparatus according to claim 6, wherein the delay detection unit includes
   a first optical receiver that receives the first light beam and converts the received first light beam into a first electrical signal;
   a second optical receiver that receives the second light beam and converts the second light beam into a second electrical signal, the second light beam whose phase is shifted by 90 degrees from that of the first light beam;
   a first delay detection unit that performs delay detection on the first electrical signal;
   a second delay detection unit that performs delay detection on the second electrical signal; and
   an adding unit that adds the first electrical signal and the second electrical signal on which the delay detection has been performed.

8. The optical-phase monitoring apparatus according to claim 1, wherein the phase detecting unit is constituted of a Mach-Zehnder interferometer.

9. The optical-phase monitoring apparatus according to claim 8, wherein the phase detecting unit includes
   an optical coupler that branches the output light into a first light beam and a second light beam;

a delaying unit that delays the first light beam by 1 bit; and
a multiplexing unit that multiplexes the first light beam that has been delayed by the delaying unit and the second light beam.

10. The optical-phase monitoring apparatus according to claim 1, further comprising a pulse generating unit that generates the control optical pulse.

11. The optical-phase monitoring apparatus according to claim 10, wherein the pulse generating unit branches the signal light, and that outputs the control optical pulse by performing clock regeneration on the branched signal light.

12. The optical-phase monitoring apparatus according to claim 10, wherein the control optical pulse has any one of a cyclic frequency of the signal light and a frequency that is obtained by dividing the cyclic frequency.

13. The optical-phase monitoring apparatus according to claim 10, wherein the control optical pulse has any one of a frequency that is shifted by a predetermined frequency from a cyclic frequency of the signal light and a frequency that is shifted by a predetermined frequency from a frequency that is obtained by dividing the cyclic frequency.

14. The optical-phase monitoring apparatus according to claim 1, wherein the optical switch is constituted of an optical parametric amplification fiber switch.

15. The optical-phase monitoring apparatus according to claim 14, wherein the optical switch includes
a multiplexing unit that multiplexes the signal light and the control optical pulse to obtain multiplexed light;
a non-linear optical fiber that passes the multiplexed light; and
a polarizer that extracts only a component of a polarization direction that is perpendicular to a polarization direction of the signal light, from the multiplexed light that has passed the non-linear optical fiber.

16. The optical-phase monitoring apparatus according to claim 14, wherein the optical switch includes
a multiplexing unit that multiplexes the signal light and the control optical pulse to obtain multiplexed light;
a non-linear optical fiber that passes the multiplexed light; and
a filter unit that extracts only a wavelength component of four-wave mixing light that is generated in the non-linear optical fiber, from the multiplexed light that has passed the non-linear optical fiber.

17. The optical-phase monitoring apparatus according to claim 15, wherein the non-linear optical fiber is constituted of a highly nonlinear fiber.

18. The optical-phase monitoring apparatus according to claim 16, wherein the non-linear optical fiber is constituted of a photonic crystal fiber.

19. The optical-phase monitoring apparatus according to claim 15, wherein the non-linear optical fiber has substantially zero dispersion near wavelength of control light pulse.

20. The optical-phase monitoring apparatus according to claim 16, wherein the non-linear optical fiber has substantially zero dispersion near wavelength of control light pulse.

21. An optical-phase monitoring method comprising multiplexing signal light and a control optical pulse;
outputting a portion of the signal light, the portion overlapping with the control optical pulse in time as output light;
detecting an optical phase of the output light; and
displaying information concerning the optical phase.

# FIG.1

$(\lambda s, fs)$

104

101  106

(fp)

102

103

OPTICAL
SWITCH

OPTICAL-
PHASE
DETECTING
CIRCUIT

DISPLAY
CIRCUIT

100

$(\lambda p, fp)$

105

# FIG.2

102

207

$\tau$

202

203

208

OPTICAL
RECEIVER

201

204      205      206

LOCAL
LIGHT
SOURCE

×2               ÷2

# FIG.3

# FIG.4

EP 1 944 592 A2

# FIG.5

EP 1 944 592 A2

# FIG.6

EP 1 944 592 A2

# FIG.7

EP 1 944 592 A2

## FIG.8

## FIG.9

## FIG.10

# FIG.11

# FIG.12A

# FIG.12B

**EP 1 944 592 A2**

REFERENCES CITED IN THE DESCRIPTION

**Patent documents cited in the description**

- JP 2007001316 A
- JP 2003065857 A